# EUROPEAN PATENT APPLICATION

(11) **EP 4 847 974 A1**
(43) Date of publication of application: **02.12.2026**
(21) Application number: 25744938.9
(22) Date of filing: 17.01.2025
(51) Int. Cl.: G02B 5/30, G02B 27/01, G02F 1/1335

(54) **REFLECTIVE FILM AND HEAD-UP DISPLAY SYSTEM**

(30) Priority: 24.01.2024 JP 2024008649
(71) Applicant: FUJIFILM Corporation, Tokyo 106-8620 (JP)
(72) Inventor: ANZAI Akihiro, Minamiashigara-shi, Kanagawa 250-0193 (JP)
(74) Representative: HGF
(86) International application number: PCT/JP2025/001287
(87) International publication number: WO 2025/159009

(57) **Abstract**

The present invention provides a reflection film and a head-up display system which can realize a head-up display system in which both brightness in a case of being visually recognized in a front direction and brightness in a case of being visually recognized in an oblique direction are excellent in a case of being applied as a combiner of the head-up display system. The reflection film of the present invention is a reflection film including a linearly polarized light reflection layer including an optically anisotropic layer and an isotropic layer, and a polarization conversion layer, in which the polarization conversion layer satisfies a predetermined requirement, and a width of the reflection film in a direction orthogonal to an in-plane slow axis of the optically anisotropic layer is 300 mm or more.

## Description

### BACKGROUND OF THE INVENTION

### 1. Field of the Invention

The present invention relates to a reflection film and a head-up display system.

### 2. Description of the Related Art

In recent years, various head-up displays have been widely applied in life, and in particular, information displayed by superimposing an image on an environmental image in a head-up display is often used in a vehicle, an aircraft, and the like.

In a case of a vehicle head-up display as an example, a reflection film is used as a combiner to provide information to a driver, and the driver can check information provided by an in-vehicle information system without looking down at a display plate or a navigator during driving.

WO2021/200652A discloses a linearly polarized light reflection film applicable to a head-up display.

### SUMMARY OF THE INVENTION

In recent years, in a head-up display system, in order to project more images, studies have been conducted on widening a width of a reflection film functioning as a combiner in a horizontal direction.

On the other hand, from the viewpoint of visibility of the image, for example, it is required that brightness is excellent in both a case where the reflection film is visually recognized in a front direction from a fixed position such as a driver's seat of a vehicle and a case where the reflection film is visually recognized in an oblique direction.

The present inventors have produced a wide reflection film using a known linearly polarized light reflection film in the related art as described in WO2021/200652A, applied the reflection film to a head-up display system, and studied the function thereof, and as a result, have found that the above-described characteristics of brightness cannot be obtained. In particular, in a case where the reflection film is visually recognized in an oblique direction from a fixed position such as a driver's seat, a decrease in brightness is large.

In view of the above circumstances, an object of the present invention is to provide a reflection film which can realize a head-up display system in which both brightness in a case of being visually recognized in a front direction and brightness in a case of being visually recognized in an oblique direction are excellent in a case of being applied as a combiner of the head-up display system.

In addition, another object of the present invention is to provide a head-up display system.

The present inventors have found that the above-described object can be achieved by the following configurations.
(1) A reflection film comprising:
   a linearly polarized light reflection layer including an optically anisotropic layer and an isotropic layer; and
   a polarization conversion layer,
   in which the polarization conversion layer satisfies a requirement of (A) or (B) described later, and
   a width of the reflection film in a direction orthogonal to an in-plane slow axis of the optically anisotropic layer is 300 mm or more.
(2) The reflection film according to (1),
   in which the polarization conversion layer satisfies the requirement of (A),
   an in-plane retardation of the retardation layer at a wavelength of 550 nm is 100 to 500 nm, and
   an angle formed by a molecular axis of the liquid crystal compound positioned at one end in the one direction and a molecular axis of the liquid crystal compound positioned at the other end in the one direction is 3° to 40°.
(3) The reflection film according to (1) or (2),
   in which the polarization conversion layer satisfies the requirement of (A),
   an in-plane retardation of the retardation layer at a wavelength of 550 nm is 210 to 340 nm, and
   an angle formed by a molecular axis of the liquid crystal compound positioned at one end in the one direction and a molecular axis of the liquid crystal compound positioned at the other end in the one direction is 7° to 15°.
(4) The reflection film according to (1),
   in which the polarization conversion layer satisfies the requirement of (B), and
   the number of pitches x of the helical alignment structure and the film thickness y (µm) of the polarization conversion layer satisfy relationships of Expression (3) and Expression (4) described later.
(5) A head-up display system comprising:
   the reflection film according to any one of (1) to (4); and
   a projector that irradiates the reflection film with projection light.
(6) The head-up display system according to (5), in which the projector emits P-polarized light as the projection light.

According to the present invention, it is possible to provide a reflection film which can realize a head-up display system in which both brightness in a case of being visually recognized in a front direction and brightness in a case of being visually recognized in an oblique direction are excellent in a case of being applied as a combiner of the head-up display system.

In addition, according to the present invention, it is possible to provide a head-up display system.

### BRIEF DESCRIPTION OF THE DRAWINGS

FIG. 1 is a schematic view of a head-up display system in the related art as viewed from a side surface side.
FIG. 2 is a schematic view of the head-up display system of FIG. 1 as viewed from an upper side.
FIG. 3 is a schematic view of a head-up display system according to an embodiment of the present invention as viewed from a side surface side.
FIG. 4 is a schematic view of the head-up display system of FIG. 2 as viewed from an upper side.
FIG. 5 is a schematic view showing an example of a linearly polarized light reflection layer.
FIG. 6 is a schematic view of the linearly polarized light reflection layer of FIG. 5 as viewed from a normal direction.
FIG. 7 is a view showing an orientation (direction) of a molecular axis of a liquid crystal compound in a retardation layer.
FIG. 8 is a view for describing an exposure method for a photo-alignment film.
FIG. 9 is a view for describing a polarizer to be used.
FIG. 10 is a view for describing an exposure method for a photo-alignment film.
FIG. 11 is a view for describing a polarizer to be used.
FIG. 12 is a schematic view of head-up display systems used in Examples and Comparative Examples as viewed from a side surface side.
FIG. 13 is a schematic view of the head-up display system of FIG. 12 as viewed from an upper side.

### DESCRIPTION OF THE PREFERRED EMBODIMENTS

Hereinafter, a reflection film and a head-up display system according to the present invention will be described in detail based on suitable embodiments shown in the accompanying drawings.

The drawings described below are exemplary drawings for describing the present invention, and the present invention is not limited to the drawings described below.

It should be noted that, in the following description, "to" indicating a numerical range includes numerical values described on both sides. For example, in a case where ε₁ is a numerical value α₁ to a numerical value β₁, a range of ε₁ is a range including the numerical value α₁ and the numerical value β₁, and is α₁ ≤ ε₁ ≤ β₁ in a mathematical symbol.

The term "light" means visible light and natural light (unpolarized light) unless otherwise specified. The visible light is light having a wavelength visible to the human eye in electromagnetic waves, and usually indicates light in a wavelength range of 380 to 780 nm. The non-visible light is light in a wavelength range of less than 380 nm or a wavelength range of more than 780 nm.

In addition, without being limited thereto, in the visible light, light in a wavelength range of 420 to 490 nm is blue (B) light, light in a wavelength range of 495 to 570 nm is green (G) light, and light in a wavelength range of 620 to 750 nm is red (R) light.

The in-plane retardation (in-plane phase difference) is a value measured using AxoScan manufactured by Axometrics, Inc. Unless otherwise specified, a measurement wavelength is 550 nm. As the in-plane retardation, a value measured by allowing light having a wavelength in a visible light wavelength range to be incident in a film normal direction is used.

Examples of the feature point of the present invention include a point that a predetermined polarization conversion layer is used as described below.

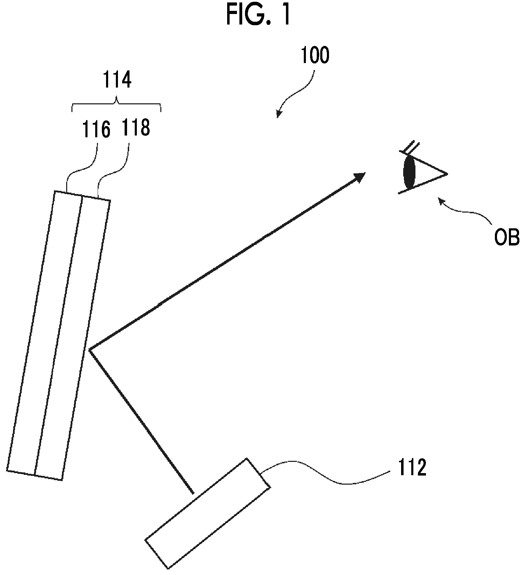

First, a problem in a head-up display system including a reflection film in the related art using a linearly polarized light reflection layer will be described with reference to FIG. 1.

FIG. 1 is a schematic view of a head-up display system 100 observed from a side surface side, and the head-up display system 100 includes a projector 112 that emits projection light and a reflection film 114 on which the projection light is incident. The reflection film 114 includes a substrate 116 and a linearly polarized light reflection layer 118.

In the head-up display system 100 shown in FIG. 1, as indicated by a solid line, the projection light emitted from the projector 112 is reflected by the reflection film 114 and is observed by an observer OB.

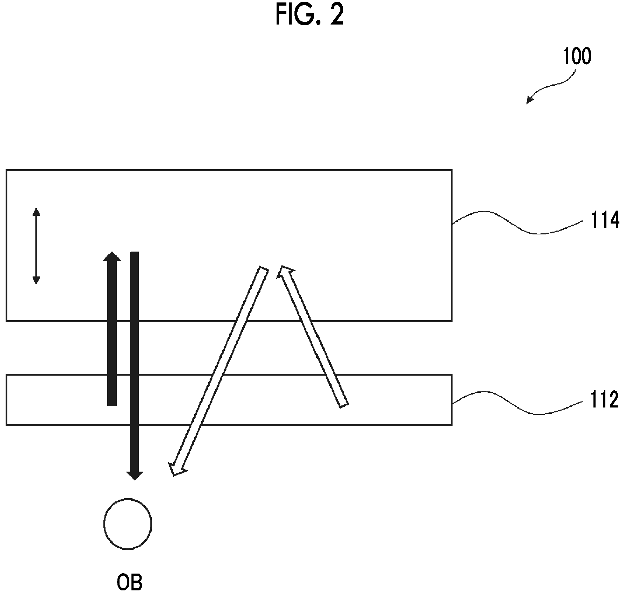

FIG. 2 is a schematic view of the head-up display system 100 shown in FIG. 1 observed from an upper side, and shows an optical path through which the projection light emitted from the projector 112 reaches the observer OB. As shown in FIG. 2, in a case where the wide reflection film 114 is used as a combiner, the projection light emitted from the projector 112 reaches the observer OB through various optical paths. A reflection axis of the linearly polarized light reflection layer 118 included in the reflection film 114 is located in a direction parallel to a vertical direction (up-down direction on the paper surface) as indicated by an arrow in FIG. 2. With respect to such a reflection film 114, as indicated by a black arrow, linearly polarized light emitted from the projector 112 and parallel to the reflection axis of the linearly polarized light reflection layer 118 is reflected by the reflection film 114 from a position in a front direction of the observer OB and reaches the observer OB. Therefore, the observer can observe a bright image displayed on the reflection film 114 located in the front direction of the observer.

On the other hand, in the wide reflection film 114, as indicated by a white arrow, there is light that is emitted as linearly polarized light from the projector 112 from a position separated from the observer in a horizontal direction with respect to the reflection film 114 and is reflected toward the observer OB side. In a case where linearly polarized light parallel to the reflection axis of the linearly polarized light reflection layer 118 is emitted from an oblique direction with respect to the reflection film 114, a change in polarization occurs in a film thickness direction of the linearly polarized light reflection layer 118 in the reflection film 114, and the reflectance of the linearly polarized light reflection layer 118 decreases. Therefore, in a case where the observer OB visually recognizes an image displayed on the reflection film 114 located in an oblique direction (in FIG. 2, a left direction of the paper surface from the observer OB) from the position of the observer OB, the image is difficult to see because the brightness is inferior to that of an image displayed in the front direction.

In order to solve the above-described problem, the present invention provides a head-up display system in which a predetermined polarization conversion layer is provided on a linearly polarized light reflection layer, and thus, realizes a head-up display system in which both the brightness of an image displayed in a front direction of an observer and the brightness of an image displayed in an oblique direction of the observer are excellent. In particular, in a case where linearly polarized light is emitted onto the reflection film from an oblique direction as indicated by the white arrow in FIG. 2, the polarization conversion layer described below changes the polarization direction as the linearly polarized light passes through the polarization conversion layer, so that polarized light taking into account polarization change caused by the linearly polarized light reflection layer is applied to the reflection film, thereby suppressing a decrease in reflection efficiency of the linearly polarized light reflection layer.

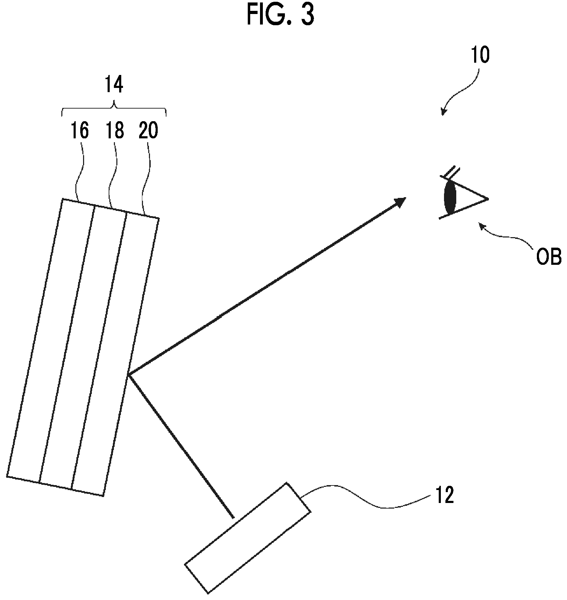

FIG. 3 shows an example of the head-up display system according to the embodiment of the present invention.

FIG. 3 is a schematic view showing a head-up display system 10 as observed from a side surface side, and the head-up display system 10 includes a projector 12 that emits projection light and a reflection film 14 that is irradiated with the projection light. The reflection film 14 includes a substrate 16, a linearly polarized light reflection layer 18, and a polarization conversion layer 20.

In the head-up display system 10 shown in FIG. 3, as indicated by a solid line, the projection light emitted from the projector 12 is reflected by the reflection film 14 and is observed by an observer OB.

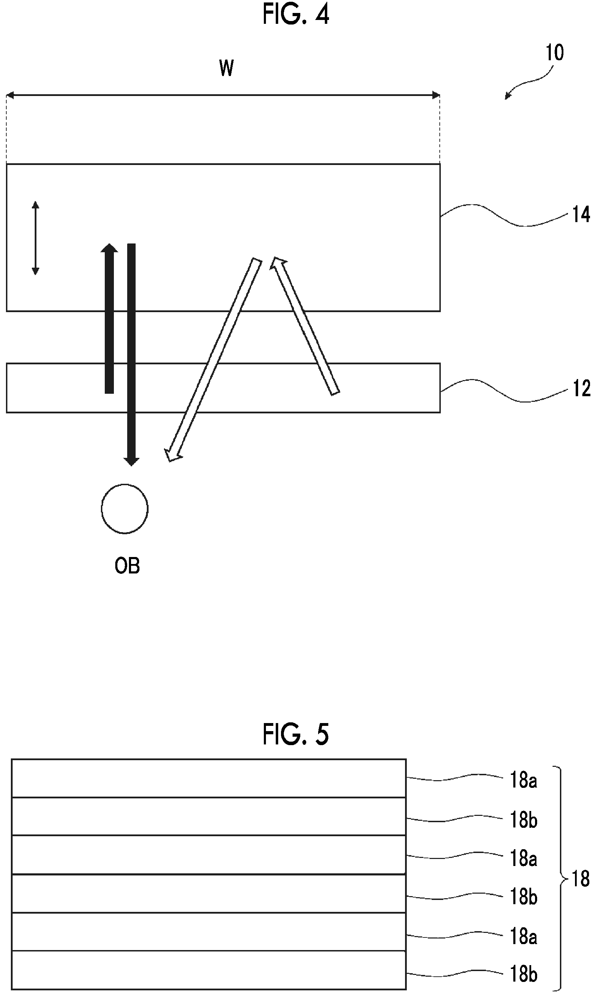

FIG. 4 is a schematic view showing the head-up display system 10 shown in FIG. 3 as observed from an upper side, and shows an optical path in which the projection light emitted from the projector 12 reaches the observer OB. As described above, in the head-up display system 10, both the projection light emitted from the projector 12 from the position of the observer OB in the front direction as indicated by a black arrow and the projection light emitted from the projector 12 in the oblique direction as indicated by a white arrow with respect to the wide reflection film 14 efficiently reach the observer. Therefore, both the brightness in a case where the observer OB visually recognizes the reflection film 14 in the front direction and the brightness in a case where the observer OB visually recognizes the reflection film 14 in the oblique direction are excellent.

A reflection axis in the linearly polarized light reflection layer 18 included in the reflection film 14 is parallel to a vertical direction (up-down direction on a paper surface in FIG. 4) in FIG. 4. As described later, the linearly polarized light reflection layer 18 is a layer provided by laminating an optically anisotropic layer and an isotropic layer, and a direction of the reflection axis of the linearly polarized light reflection layer 18 corresponds to a direction of an in-plane slow axis of the optically anisotropic layer. That is, the direction of the in-plane slow axis of the optically anisotropic layer in FIG. 4 corresponds to the direction of the arrow described in the reflection film 14 of FIG. 4.

In the reflection film 14, a width W (length) of the reflection film 14 in a direction orthogonal to the in-plane slow axis of the optically anisotropic layer (corresponding to a direction orthogonal to the reflection axis in the linearly polarized light reflection layer 18) is 300 mm or more. The width (length) is preferably 300 to 1500 mm and more preferably 400 to 1200 mm. The width W of the reflection film 14 also corresponds to the width (length) of the reflection film 14 in the direction orthogonal to the vertical direction in a case where the reflection film 14 is applied to the head-up display system 10.

A length of the reflection film 14 in the direction orthogonal to the width W (corresponding to a length in a direction parallel to the in-plane slow axis of the optically anisotropic layer) is not particularly limited, but is usually equal to or less than the width W and is more usually less than the width W. Among the above, a ratio of the length of the reflection film in the direction orthogonal to the in-plane slow axis of the optically anisotropic layer (corresponding to the width W) to the length of the reflection film in the direction parallel to the in-plane slow axis of the optically anisotropic layer is preferably 1.0 to 25, more preferably 1.5 to 12, and still more preferably 2.0 to 7.5.

In the present invention, a shape of the reflection film is not particularly limited as long as the above-described requirement of the width is satisfied, but is usually a rectangular shape.

Hereinafter, each member of the head-up display system 10 will be described in detail.

### <Projector>

A configuration of the projector 12 is not particularly limited as long as the projector 12 can emit the projection light to the reflection film 14, and a known projector can be used.

The projection light emitted from the projector 12 is preferably P-polarized light.

The projector 12 may include a polarizer inside the projector 12 in order to emit the projection light which is P-polarized light.

Examples of the projector 12 include a liquid crystal on silicon (LCOS) projector, a laser projector, and a liquid crystal projector (liquid crystal display device).

### <Substrate>

The reflection film 14 includes a substrate 16. In the reflection film according to the embodiment of the present invention, the substrate is any member and may not be included in the reflection film.

The substrate 16 is a member that supports the linearly polarized light reflection layer 18 and the polarization conversion layer 20.

A material of the substrate 16 is not particularly limited, and examples thereof include a resin and glass. In a case where the substrate 16 is a resin substrate, examples of the substrate 16 include a plastic film such as polyester such as polyethylene terephthalate (PET), polycarbonate, an acrylic resin, an epoxy resin, polyurethane, polyamide, polyolefin, a cellulose derivative, and silicone.

A thickness of the substrate 16 may be approximately 5.0 to 1,000 µm, preferably 10 to 250 µm, and more preferably 15 to 90 µm.

### <Linearly polarized light reflection layer>

The reflection film 14 includes the linearly polarized light reflection layer 18.

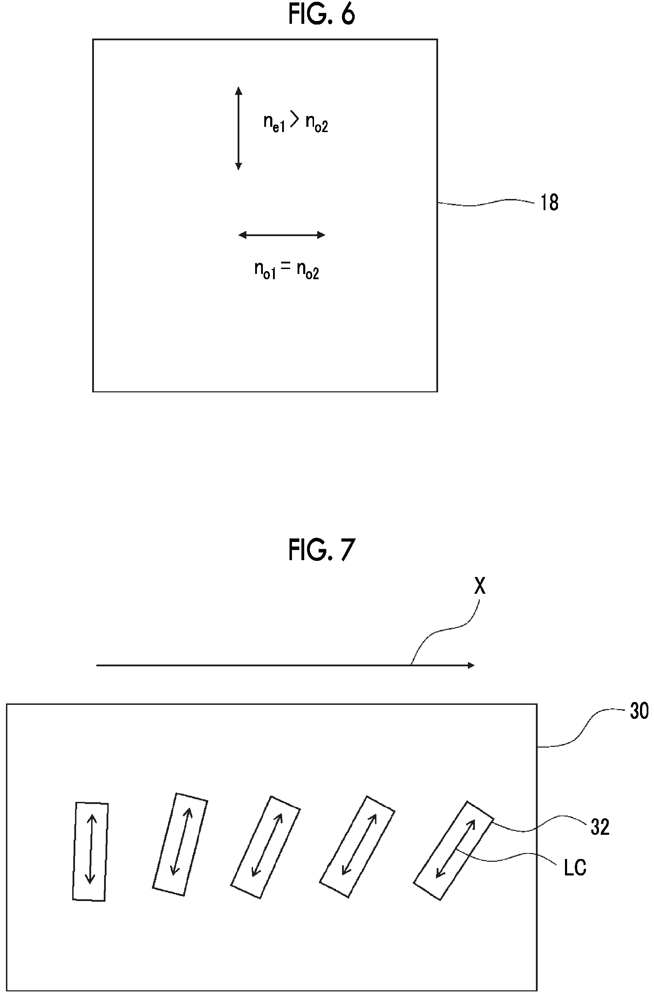

FIG. 5 is a schematic view showing an example of the linearly polarized light reflection layer 18. In addition, FIG. 6 is a schematic view of the linearly polarized light reflection layer 18 as viewed from a normal direction. As shown in FIG. 5, the linearly polarized light reflection layer 18 is provided by alternately laminating an optically anisotropic layer 18a and an isotropic layer 18b.

In addition, in the linearly polarized light reflection layer 18, a refractive index nₑ₁ of the optically anisotropic layer 18a in an in-plane slow axis direction is larger than a refractive index nₒ₂ of the isotropic layer 18b, and a refractive index nₒ₁ of the optically anisotropic layer 18a in a direction orthogonal to the in-plane slow axis is substantially the same as the refractive index nₒ₂ of the isotropic layer 18b. The plurality of optically anisotropic layers 18a are laminated such that the in-plane slow axes are parallel to each other. Therefore, as shown in FIG. 6, in a certain direction (up-down direction in FIG. 6), a state where a layer having a high refractive index (nₑ₁) and a layer having a low refractive index (nₒ₂) are laminated is provided. On the other hand, in a direction (left-right direction in FIG. 6) orthogonal to the certain direction, a state where layers having the same refractive index are laminated is provided.

It is known that a film in which a layer having a low refractive index (layer of low refractive index) and a layer having a high refractive index (layer of high refractive index) are alternately laminated reflects light having a specific wavelength due to structural interference between a plurality of layers of low refractive index and layers of high refractive index. Therefore, the linearly polarized light reflection layer 18 shown in FIGS. 5 and 6 reflects linearly polarized light in the in-plane slow axis direction (up-down direction in FIG. 6) of the optically anisotropic layer 18a and transmits linearly polarized light in the left-right direction.

That is, the linearly polarized light reflection layer 18 is a layer that selectively reflects linearly polarized light in a specific wavelength range. It is preferable that the linearly polarized light reflection layer 18 exhibits selective reflection in a part of a visible light wavelength range. The linearly polarized light reflection layer 18 may reflect, for example, light for displaying a projection image. The reflection film 14 may have a configuration in which a plurality of linearly polarized light reflection layers 18 corresponding to each wavelength range are provided.

The linearly polarized light reflection layer 18 can transmit linearly polarized light that is not reflected. Therefore, the reflection film 14 includes the linearly polarized light reflection layer 18, and thus a part of light can be transmitted even in a wavelength range where the linearly polarized light reflection layer 18 exhibits reflection.

In the linearly polarized light reflection layer in which the layer of low refractive index and the layer of high refractive index are laminated, the wavelength to be reflected and the reflectance can be adjusted by the difference in refractive index between the layer of low refractive index and the layer of high refractive index, the thickness, the number of laminated layers, and the like. Specifically, by setting the thickness d of the layer of low refractive index and the layer of high refractive index to d = λ/(4 × n) from the wavelength λ of light to be reflected and the refractive index n, the wavelength λ of light to be reflected can be adjusted. In addition, since the reflectance increases as the number of laminated layers of the layer of low refractive index and the layer of high refractive index increases, the reflectance can be adjusted by adjusting the number of laminated layers. In addition, the width of the reflection band can be adjusted by the difference in refractive index between the layer of low refractive index and the layer of high refractive index.

As a material and a method for producing the linearly polarized light reflection layer, for example, those described in JP1997-506837A (JP-H9-506837A) can be used. Specifically, in a case where the processing is performed under conditions selected to obtain a refractive index relationship, the linearly polarized light reflection layer can be formed using a wide variety of materials. In general, it is necessary that the first material has a refractive index different from that of the second material in the selected direction. This difference in refractive index can be achieved by various methods including stretching, extrusion molding, or coating during or after the formation of the film. Furthermore, it is preferable that the two materials have similar rheological characteristics (for example, melt viscosity) so that the two materials can be co-extruded.

As the linearly polarized light reflection layer, a commercially available product can be used. As the commercially available product, a laminate of a reflective type polarizing plate and a temporary support may be used. Examples of the commercially available product include commercially available optical films sold as PICASUS (registered trademark) (manufactured by Toray Industries, Inc.), DBEF (registered trademark) (manufactured by 3M Company), and APF (Advanced Polarizing Film (manufactured by 3M Company)).

A thickness of the linearly polarized light reflection layer is preferably 2.0 to 50 µm and more preferably 8.0 to 30 µm.

In addition, the number of laminated layers of the optically anisotropic layer and the isotropic layer in the linearly polarized light reflection layer may be appropriately set according to the required reflectance or the like, but is preferably 10 to 200.

### <Polarization conversion layer>

The reflection film 14 includes a polarization conversion layer 20.

The polarization conversion layer 20 satisfies the following requirement of (A) or (B).
(A) The polarization conversion layer is a retardation layer, the retardation layer contains a liquid crystal compound, and an orientation of a molecular axis of the liquid crystal compound continuously or stepwise changes along one in-plane direction of the retardation layer.
(B) The polarization conversion layer is a layer in which a helical alignment structure of a liquid crystal compound, the liquid crystal compound being twist-aligned along a helical axis extending along a thickness direction, is fixed, and in a case where the number of pitches of the helical alignment structure is defined as x and a film thickness of the polarization conversion layer is defined as y (µm), relationships of Expression (1) and Expression (2) are satisfied. $0.010 \leq x < 0.100$ Expression (1) $0.5 \leq y \leq 5.0$ Expression (2)

Hereinafter, the requirements of (A) and (B) will be described in detail.

### (Requirement (A))

In the requirement (A), the polarization conversion layer is a retardation layer. In addition, the retardation layer contains a liquid crystal compound, and an orientation of a molecular axis of the liquid crystal compound continuously or stepwise changes along one in-plane direction of the retardation layer.

Hereinafter, the retardation layer will be described with reference to the drawings.

FIG. 7 shows a plan view of the retardation layer.

As shown in FIG. 7, a retardation layer 30 contains a liquid crystal compound LC, and an orientation of a molecular axis 32 of the liquid crystal compound LC changes while continuously rotating clockwise in one direction indicated by an arrow X. In FIG. 7, the orientation of the molecular axis 32 of the liquid crystal compound LC rotates clockwise, but the present invention is not limited to this aspect, and the orientation may rotate counterclockwise.

The molecular axis 32 of the liquid crystal compound LC is an axis having the highest refractive index in the liquid crystal compound LC. For example, in a case where the liquid crystal compound LC is a rod-like liquid crystal compound, the molecular axis is along a major axis direction of a rod shape. In addition, in a case where the liquid crystal compound LC is a disk-like liquid crystal compound, the molecular axis is along a direction orthogonal to a thickness direction of the disk.

In the liquid crystal compound LC contained in the retardation layer 30, the liquid crystal compounds LC having the same orientation of the molecular axis 32 are arranged in a Y direction orthogonal to the arrow X direction, that is, a Y direction orthogonal to the one direction in which the molecular axis 32 continuously rotates.

In other words, in the liquid crystal compound LC contained in the retardation layer 30, among the liquid crystal compounds LC arranged in the Y direction, the angle formed by the orientation of the molecular axis 32 and the arrow X direction is the same.

FIG. 7 shows an aspect in which the molecular axis of the liquid crystal compound LC continuously rotates (changes) in the arrow X direction, but the present invention is not limited to this aspect, and may be an aspect in which the molecular axis rotates (changes) stepwise.

An angle formed by the molecular axis of the liquid crystal compound positioned at one end of the retardation layer 30 in the arrow X direction and the molecular axis of the liquid crystal compound positioned at the other end of the retardation layer 30 in the arrow X direction is not particularly limited, but in a case where the reflection film according to the embodiment of the present invention is applied to a combiner of a head-up display system, from the viewpoint that the brightness in a case of being visually recognized in a front direction and the brightness in a case of being visually recognized in an oblique direction are more excellent (hereinafter, also simply referred to as "viewpoint that the effect of the present invention is more favorable"), the angle is preferably 3° to 40° and more preferably 7° to 15°.

That is, a rotation angle along the X-axis direction from a position of the molecular axis of the liquid crystal compound positioned at one end in the arrow X direction to a position of the molecular axis of the liquid crystal compound positioned at the other end in the arrow X direction of the retardation layer 30 is preferably 3° to 40° and more preferably 7° to 15°.

An in-plane retardation of the retardation layer 30 at a wavelength of 550 nm is not particularly limited, but from the viewpoint that the effect of the present invention is more favorable, it is preferably 100 to 500 nm and more preferably 210 to 340 nm.

As described in FIGS. 1 and 2 described above, in a case where the polarization conversion layer is not provided, the brightness of the image displayed by the light emitted from a position away from the observer in the horizontal direction decreases.

On the other hand, in a case where the retardation layer 30 shown in FIG. 7 is applied as the polarization conversion layer 20 shown in FIG. 4, since the molecular axis 32 of the liquid crystal compound LC in the retardation layer 30 varies, the polarization direction of the projection light emitted from a position away from the observer in the horizontal direction is adjusted to be easily reflected by the linearly polarized light reflection layer 18.

More specifically, in a case where the retardation layer 30 shown in FIG. 7 is applied such that an end part of the retardation layer 30 on the left side of the paper surface is positioned at an end part of the polarization conversion layer 20 on the left side of the paper surface shown in FIG. 4, the molecular axis of the liquid crystal compound LC in the retardation layer 30 positioned in front of the observer is parallel to the vertical direction. That is, the molecular axis of the liquid crystal compound LC in the retardation layer 30 positioned in front of the observer is parallel to the reflection axis of the linearly polarized light reflection layer 18. Therefore, even in a case where linearly polarized light parallel to the reflection axis of the linearly polarized light reflection layer 18 is incident, the retardation layer 30 does not affect the linearly polarized light. On the other hand, the polarization change by the linearly polarized light reflection layer 18 is larger as the projection light is emitted from a position away from the observer in the horizontal direction (see the white arrow in FIG. 4). Therefore, the polarization direction of the projection light with which the linearly polarized light reflection layer 18 is irradiated is adjusted by further inclining the direction of the molecular axis 32 of the liquid crystal compound LC in the retardation layer 30 as the distance from the observer in the horizontal direction is larger than the molecular axis of the liquid crystal compound LC positioned in the front direction of the observer.

A direction of an in-plane slow axis of the retardation layer is appropriately adjusted such that the effect of the present invention is obtained, but an angle formed by the one direction in which the orientation of the molecular axis of the liquid crystal compound changes and the reflection axis of the linearly polarized light reflection layer 18 is preferably 80° to 100°, more preferably 85° to 95°, and still more preferably 90°. In other words, the angle formed by the one direction and the in-plane slow axis of the optically anisotropic layer in the linearly polarized light reflection layer is preferably 80° to 100°, more preferably 85° to 95°, and still more preferably 90°.

In the above-described aspect, it is preferable that the molecular axis of the liquid crystal compound positioned at one end of the retardation layer in the one direction in which the orientation of the molecular axis of the liquid crystal compound changes is parallel to the reflection axis of the linearly polarized light reflection layer.

In addition, as described above, a rotation direction of the molecular axis of the liquid crystal compound from the molecular axis of the liquid crystal compound positioned at one end of the retardation layer in the one direction in which the orientation of the molecular axis of the liquid crystal compound changes to the molecular axis of the liquid crystal compound positioned at the other end may be clockwise or counterclockwise.

For example, in a case where the reflection film is used as a combiner of a head-up display system of a vehicle in which a driver's seat is positioned on the left side, as shown in FIG. 7, it is preferable that the molecular axis of the liquid crystal compound in the retardation layer rotates clockwise in a direction from the driver's seat to a passenger seat side (from the left side to the right side of the paper surface in FIG. 7).

In addition, in a case where the reflection film is used as a combiner of a head-up display system of a vehicle in which a driver's seat is positioned on the right side, it is preferable that the molecular axis of the liquid crystal compound in the retardation layer rotates counterclockwise in a direction from the driver's seat to a passenger seat side.

As described above, the orientation of the molecular axis of the liquid crystal compound rotates in the one direction in the retardation layer, but a degree of the rotation of the orientation of the molecular axis of the liquid crystal compound is preferably 0.05°/cm to 0.6°/cm and more preferably 0.1°/cm to 0.5°/cm in the one direction.

The above-described unit represents a rotation angle of the molecular axis of the liquid crystal compound per 1 cm in the one direction.

A film thickness of the retardation layer is not particularly limited, and it is preferable that the film thickness is adjusted to be in the above-described range of the in-plane retardation. Among these, the film thickness is preferably 0.6 to 3.0 µm and more preferably 1.2 to 2.0 µm.

The retardation layer contains a liquid crystal compound LC.

As the liquid crystal compound, both a polymer liquid crystal compound and a low-molecular-weight liquid crystal compound can be used.

Here, the "polymer liquid crystal compound" refers to a liquid crystal compound having a repeating unit in a chemical structure.

In addition, the "low-molecular-weight liquid crystal compound" refers to a liquid crystal compound having no repeating unit in a chemical structure.

The liquid crystal compound may be a rod-like liquid crystal compound or a disk-like liquid crystal compound, but is preferably a rod-like liquid crystal compound.

The liquid crystal compound in the retardation layer may be fixed.

In the present specification, it is preferable that the "fixed" state is a state in which the alignment of the liquid crystal compound is maintained. Specifically, the "fixed" state is preferably a state in which, in a temperature range of usually 0°C to 50°C, or under more severe conditions, -30°C to 70°C, the layer has no fluidity and can continue to stably maintain the fixed alignment state without causing a change in the alignment form due to an external field or external force.

In addition, the liquid crystal compound in the retardation layer may no longer exhibit liquid crystallinity. For example, in a case where a retardation layer is formed of a polymerizable liquid crystal compound, the liquid crystal compound may be polymerized by a curing reaction and may no longer exhibit liquid crystallinity.

The retardation layer is preferably a layer formed of a composition containing a polymerizable liquid crystal compound.

The polymerizable liquid crystal compound is a liquid crystal compound having a polymerizable group.

Examples of the polymerizable group include an unsaturated polymerizable group, an epoxy group, and an aziridinyl group, and an unsaturated polymerizable group is preferable and an ethylenically unsaturated polymerizable group is more preferable.

A method of producing the retardation layer is not particularly limited, and a known method can be used.

For example, a method including, in the following order, a step of applying a composition for forming a retardation layer, containing a liquid crystal compound, onto an alignment film to form a coating film (hereinafter, also referred to as "coating film forming step") and a step of aligning the liquid crystal compound contained in the coating film (hereinafter, also referred to as "alignment step") is preferable.

Hereinafter, each step will be described.

The coating film forming step is a step of applying a composition for forming a retardation layer onto an alignment film to form a coating film.

The composition for forming a retardation layer contains a liquid crystal compound. As described above, the liquid crystal compound may be a polymerizable liquid crystal compound.

The composition for forming a retardation layer may contain a component (for example, a solvent, a polymerization initiator, and the like) other than the liquid crystal compound.

Examples of a method of applying the composition for forming a retardation layer include known methods such as a roll coating method, a gravure printing method, a spin coating method, a wire bar coating method, an extrusion coating method, a direct gravure coating method, a reverse gravure coating method, a die-coating method, a spray method, and an inkjet method.

The alignment film may be any film as long as the film is a film in which the liquid crystal compound that can be contained in the composition for forming a retardation layer is aligned.

The alignment film can be provided by a rubbing treatment on a film surface of an organic compound (preferably a polymer), oblique vacuum evaporation of an inorganic compound, formation of a layer having a microgroove, or a method such as accumulation of an organic compound (for example, ω-tricosanoic acid, dioctadecyldimethylammonium chloride, or methyl stearate) by a Langmuir-Blodgett method (LB film). Furthermore, an alignment film in which an alignment function is generated by application of an electric field, application of a magnetic field, or irradiation with light is also known. Among these, a photo-alignment film formed by irradiation with light is also preferable from the viewpoint of the uniformity of alignment.

As the photo-alignment film, a photo-alignment film containing an azobenzene coloring agent, polyvinyl cinnamate, or the like is used.

Examples of a method of applying an alignment pattern for aligning the liquid crystal compound to the photo-alignment film include a known exposure treatment. Among these, a method of exposing a mask having regions with different transmittances and a polarizer (for example, a wire grid) in combination (hereinafter, also simply referred to as a "specific method") is an exemplary example. Hereinafter, an example of the specific method will be described in detail.

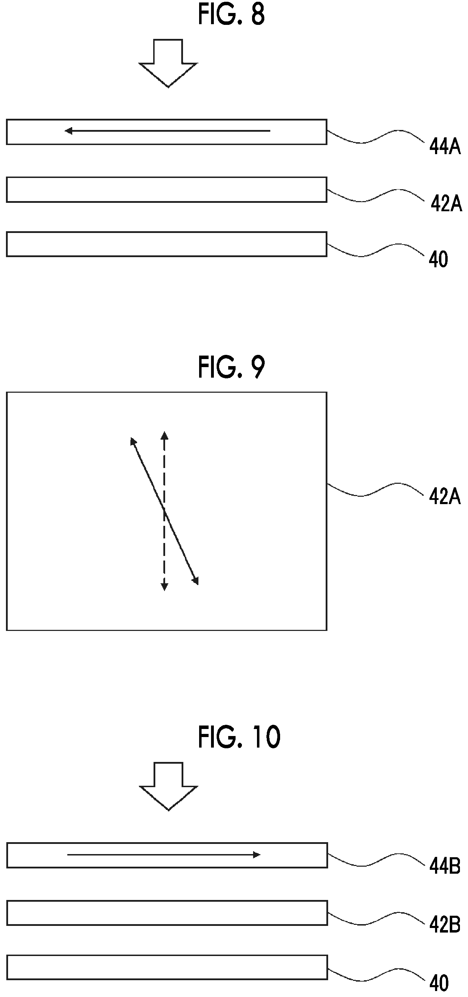

In the specific method, in order to produce an alignment film having an alignment pattern in which a liquid crystal layer having a disposition of a molecular axis of a liquid crystal compound as shown in FIG. 7 can be formed, the photo-alignment film is exposed twice. First, as the first exposure, as shown in FIG. 8, a polarizer 42A and a mask 44A are disposed on a photo-alignment film 40, and exposure is performed from a direction indicated by a white arrow. A transmission axis of the polarizer 42A is located in a direction rotated by a predetermined angle counterclockwise with respect to a front-rear direction of the paper surface in FIG. 8. More specifically, FIG. 9 is a diagram showing the polarizer 42A observed from the direction of the white arrow in FIG. 8, an arrow indicated by a broken line corresponds to the front-rear direction of the paper surface in FIG. 8, and an arrow indicated by a solid line corresponds to the transmission axis of the polarizer 42A. In addition, the mask 44A is a mask in which the transmittance increases in a direction of the arrow shown in FIG. 8. In a case where the first exposure is performed, the photo-alignment film 40 is irradiated with light along the transmission axis direction of the polarizer 42A. However, in a region of the photo-alignment film 40 on a left side of the paper surface in FIG. 8, stronger exposure is performed according to the transmittance distribution of the mask 44A.

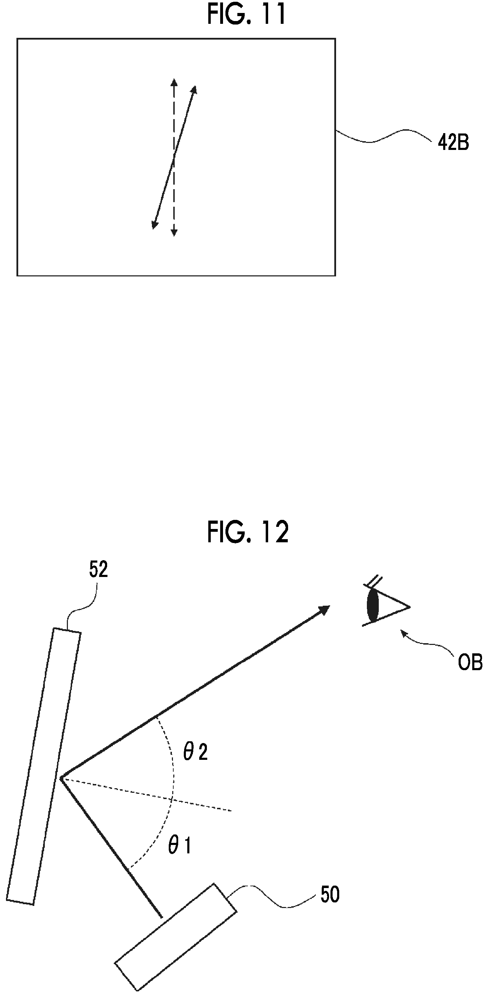

Next, as the second exposure, as shown in FIG. 10, a polarizer 42B and a mask 44B are disposed on the photo-alignment film 40 on which the first exposure is performed, and exposure is performed from a direction indicated by a white arrow. A transmission axis of the polarizer 42B is located in a direction rotated by a predetermined angle clockwise with respect to a front-rear direction of the paper surface in FIG. 10. More specifically, FIG. 11 is a diagram showing the polarizer 42B observed from the direction of the white arrow in FIG. 10, an arrow indicated by a broken line corresponds to the front-rear direction of the paper surface in FIG. 10, and an arrow indicated by a solid line corresponds to the transmission axis of the polarizer 42B. In addition, the mask 44B is a mask in which the transmittance increases in a direction of the arrow shown in FIG. 10. In a case where the second exposure is performed, the photo-alignment film 40 is irradiated with light along the transmission axis direction of the polarizer 42B. However, in a region of the photo-alignment film 40 on a right side of the paper surface in FIG. 10, stronger exposure is performed according to the transmittance distribution of the mask 44B.

In the above-described procedure, by adjusting the transmittance distributions of the mask 44A and the mask 44B and the disposition positions of the polarizer 42A and the polarizer 42B, the magnitude of the function of aligning the liquid crystal compound at each position of the photo-alignment film 40 can be adjusted. For example, in a case where, in FIG. 9, the transmission axis of the polarizer 42A is located counterclockwise by 10° with respect to the broken line, in FIG. 11, the transmission axis of the polarizer 42B is located clockwise by 10° with respect to the broken line, and the first exposure amount and the second exposure amount are the same, the influence of the two times of exposure cancels each other, and the function of aligning the liquid crystal compound in the direction of the broken line in FIG. 9 can be imparted. In a case where the second exposure amount is increased, the function of aligning the liquid crystal compound in a direction inclined to the transmission axis side of the polarizer 42B can be imparted.

In the above specific method, as for the direction in which the polarizer is arranged, an optimum direction is appropriately selected according to the material of the photo-alignment film to be used.

The alignment step is a step of aligning the liquid crystal compound contained in the coating film.

The alignment step may include a drying treatment. By the drying treatment, components such as a solvent can be removed from the coating film. The drying treatment may be performed by a method of leaving the coating film to stand at room temperature for a predetermined time (for example, natural drying), or may be performed by a method of heating and/or blowing air.

It is preferable that the alignment step includes a heating treatment.

From the viewpoint of production suitability and the like, the heating treatment is preferably performed at 10°C to 250°C and more preferably performed at 25°C to 190°C. In addition, a heating time is preferably 1 to 300 seconds and more preferably 1 to 60 seconds.

The alignment step may include a cooling treatment performed after the heating treatment. The cooling treatment is a treatment of cooling the heat-treated coating film to room temperature (about 20°C to 25°C). As a result, the alignment of the liquid crystal compound contained in the coating film is further fixed, and the alignment degree of the liquid crystal compound is further increased. The cooling means is not particularly limited and can be performed by a known method.

After the alignment step, a step of curing the retardation layer (hereinafter, also referred to as a "curing step") may be included.

The curing step is performed by, for example, heating and/or irradiation with light (exposure). Among these, it is preferable that the curing step is performed by irradiation with light.

As a light source used for curing, various light sources such as infrared rays, visible light, and ultraviolet rays can be used, but ultraviolet rays are preferable. In addition, the irradiation with ultraviolet rays may be performed while heating during curing, or the irradiation with ultraviolet rays may be performed through a filter which transmits only a specific wavelength.

In addition, the exposure may be performed in a nitrogen atmosphere.

### (Requirement (B))

In the requirement (B), the polarization conversion layer is a layer (hereinafter, also referred to as a "twist layer") in which a helical alignment structure of a liquid crystal compound that is twist-aligned along a helical axis extending in a thickness direction is fixed. In addition, in a case where the number of pitches of the helical alignment structure is denoted by x and a film thickness of the polarization conversion layer (twist layer) is denoted by y (µm), the relationships of Expression (1) and Expression (2) are satisfied. $0.010 \leq x < 0.100$ Expression (1) $0.5 \leq y \leq 5.0$ Expression (2)

The twist layer has a function of optical rotation which rotates a direction of incident linearly polarized light. Therefore, by disposing the twist layer on the linearly polarized light reflection layer, the polarization direction of the projection light with which the linearly polarized light reflection layer 18 is irradiated from a position away from the driver's seat in the horizontal direction can be adjusted, and a desired effect can be obtained in the same manner as the retardation layer.

As described above, the number of pitches x of the helical alignment structure preferably satisfies the relationship of Expression (1) and a relationship of Expression (3). $0.014 \leq x \leq 0.050$ Expression (3)

One pitch of the helical alignment structure of the liquid crystal compound is one turn of helical winding of the liquid crystal compound. That is, a state where a director (major axis direction in a case of a rod-like liquid crystal) of the helically aligned liquid crystal compound is rotated by 360° is set as one pitch.

In addition, the film thickness y (µm) of the polarization conversion layer (twist layer) preferably satisfies the relationship of Expression (2) and a relationship of Expression (4). $0.6 \leq y \leq 4.0$ Expression (4)

Examples of the liquid crystal compound contained in the twist layer include the same compounds as the liquid crystal compound contained in the retardation layer described above.

The liquid crystal compound in the twist layer is fixed.

In addition, the liquid crystal compound in the twist layer may not exhibit liquid crystallinity. For example, in a case where a twist layer is formed of a polymerizable liquid crystal compound, the liquid crystal compound may be polymerized by a curing reaction and may no longer exhibit liquid crystallinity.

The twist layer is preferably a layer formed of a composition containing a polymerizable liquid crystal compound.

The polymerizable liquid crystal compound is a liquid crystal compound having a polymerizable group.

Examples of the polymerizable group include an unsaturated polymerizable group, an epoxy group, and an aziridinyl group, and an unsaturated polymerizable group is preferable and an ethylenically unsaturated polymerizable group is more preferable.

A method of producing the twist layer is not particularly limited, and a known method can be used.

For example, a method including, in the following order, a step of applying a composition for forming a twist layer, containing a polymerizable liquid crystal compound and a chiral agent, to form a coating film, a step of aligning the liquid crystal compound contained in the coating film, and a step of polymerizing and fixing the polymerizable liquid crystal compound in the coating film is preferable.

Hereinafter, each step will be described.

The chiral agent has a function of inducing a helical structure of a cholesteric liquid crystalline phase. The chiral compound may be selected according to the purpose since the helical sense or the helical pitch induced by the compound varies.

The chiral agent may have a polymerizable group.

Examples of the chiral agent include an isosorbide derivative, an isomannide derivative, and a binaphthyl derivative. As the isosorbide derivative, a commercially available product such as LC756 manufactured by BASF SE may be used.

Examples of the method of applying the composition for forming a twist layer include the same method as the method of applying the composition for forming a retardation layer described above.

The step of aligning the liquid crystal compound contained in the applied coating film preferably includes a heating treatment.

From the viewpoint of production suitability and the like, the heating treatment is preferably performed at 10°C to 250°C and more preferably performed at 25°C to 190°C. In addition, a heating time is preferably 1 to 300 seconds and more preferably 1 to 60 seconds.

The above-described step may include a cooling treatment performed after the heating treatment. The cooling treatment is a treatment of cooling the heat-treated coating film to room temperature (about 20°C to 25°C). As a result, the alignment of the liquid crystal compound contained in the coating film is further fixed, and the alignment degree of the liquid crystal compound is further increased. The cooling means is not particularly limited and can be performed by a known method.

After the above-described step, a step of curing the coating film may be included.

The curing step is performed by, for example, heating and/or irradiation with light (exposure). Among these, it is preferable that the curing step is performed by irradiation with light.

As a light source used for curing, various light sources such as infrared rays, visible light, and ultraviolet rays can be used, but ultraviolet rays are preferable. In addition, the irradiation with ultraviolet rays may be performed while heating during curing, or the irradiation with ultraviolet rays may be performed through a filter which transmits only a specific wavelength.

In addition, the exposure may be performed in a nitrogen atmosphere.

The reflection film may include members other than the above-described substrate, linearly polarized light reflection layer, and polarization conversion layer.

Examples of the other members include a pressure-sensitive adhesive layer and an adhesive layer.

### <Applications>

The head-up display system according to the embodiment of the present invention can be applied to various applications.

Examples thereof include a vehicle-mounted head-up display system.

### Examples

Hereinafter, the characteristics of the present invention will be described in more detail with reference to Examples. The materials, reagents, amounts of substances and proportions thereof, operations, and the like shown in the following examples can be appropriately modified as long as the modifications do not depart from the spirit of the present invention. Therefore, the scope of the present invention is not limited to the following examples.

### <Production of linearly polarized light reflection film>

A linearly polarized light reflection film was produced as follows based on the method described in JP1997-506837A (JP-H9-506837A).

2,6-polyethylene naphthalate (PEN) and a copolyester (coPEN) of naphthalate 70/terephthalate 30 were synthesized using ethylene glycol as a diol in a standard polyester resin synthesis reactor. A single-layer film of PEN and coPEN was extrusion-molded, stretched at a temperature of about 150°C by adjusting the stretching ratio in the machine direction and the lateral direction, and heat-treated at about 230°C for 30 seconds. It was confirmed that the refractive index of PEN with respect to the in-plane slow axis (alignment axis) was about 1.74, the refractive index with respect to the transverse axis was 1.64, and the refractive index of the coPEN film was about 1.64. That is, the difference Δn between the refractive index of the optically anisotropic layer in the in-plane slow axis direction and the refractive index of the isotropic layer was 0.10.

Subsequently, using a 25-slot supply block equipped with a standard extrusion die, PEN and coPEN were co-extruded under the conditions of the above-described relationship of Δn to form a layer having seven layers of PEN and seven layers of coPEN, which had the film thicknesses shown in (1) of Table 1, alternately. Further, by repeating the same operation, PEN and coPEN having the thicknesses shown in (2) to (6) of Table 1 were alternately formed in the number of layers shown in Table 1 in order, thereby producing a laminate in which a total of 92 layers were laminated.

Next, the stretched laminate was heat-treated in an air oven at about 230°C for 30 seconds to produce a linearly polarized light reflection film. In a case where the reflection spectrum of the linearly polarized light reflection film was measured with a spectrophotometer (manufactured by JASCO Corporation, V-670), a reflection spectrum having reflectance peaks at reflection bands of 470 nm, 500 nm, 550 nm, 600 nm, 650 nm, and 720 nm was obtained.

**[Table 1]**

| | | (1) | (2) | (3) | (4) | (5) | (6) |
|---|---|---|---|---|---|---|---|
| PEN | Film thickness | 68.7nm | 73.1nm | 80.4nm | 87.7nm | 95.0nm | 105.3nm |
| coPEN | Film thickness | 71.6nm | 76.2nm | 83.8nm | 91.5nm | 99.1nm | 109.8nm |
| Number of layers | | 7 layers | 7 layers | 8 layers | 8 layers | 8 layers | 8 layers |

### <Production of retardation layer>

As a support, TAC (cellulose acylate film) having a width of 1,000 mm and a length of 200 mm was produced. The following composition for forming an alignment film was applied onto the support by spin coating. The support on which the coating film of the composition for forming an alignment film was formed was dried on a hot plate at 60°C for 60 seconds to form an alignment film P-1.

### -Composition for forming alignment film-

| | |
|---|---|
| · Material for photo alignment shown below | 1.00 part by mass |
| · Water | 16.00 parts by mass |
| · Butoxyethanol | 42.00 parts by mass |
| · Propylene glycol monomethyl ether | 42.00 parts by mass |

### Material for photo alignment

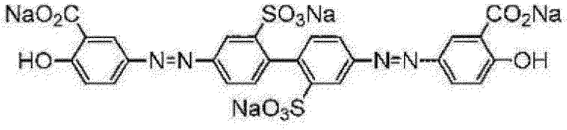

The obtained alignment film P-1 was irradiated with light by the specific method in which the two times of exposure described with reference to FIGS. 8 to 11 were performed. The transmission axis of the polarizer to be used and the transmittance of the mask were adjusted such that a retardation layer 1 exhibiting characteristics described later was obtained. Specifically, the transmission axis of the polarizer (wire grid) in the first exposure was located at a position rotated by a predetermined angle counterclockwise with respect to the direction of the arrow indicating the transmittance distribution of the mask 44A, and the first exposure was performed by irradiation with ultraviolet rays. In addition, the transmission axis of the polarizer (wire grid) in the second exposure was located at a position rotated by a predetermined angle clockwise with respect to the direction of the arrow indicating the transmittance distribution of the mask 44B, and the second exposure was performed by irradiation with ultraviolet rays. The irradiation amounts in the first exposure and the second exposure were appropriately adjusted such that the retardation layer 1 described later was obtained. In addition, the transmittance distributions of the masks used (mask 44A and mask 44B) were also appropriately adjusted such that the retardation layer 1 described later was obtained.

Next, the following components were mixed to prepare a composition for forming a retardation layer having the following formulation.

| | |
|---|---|
| · Mixture 1 | 100 parts by mass |
| · Fluorine-based horizontal alignment agent 1 (alignment control agent 1) | 0.05 parts by mass |
| · Fluorine-based horizontal alignment agent 2 (alignment control agent 2) | 0.01 parts by mass |
| · Polymerization initiator IRGACURE OXE01 (manufactured by BASF SE) | 1.0 part by mass |
| · Solvent (methyl ethyl ketone) | Amount at which concentration of solute was 20% by mass |

### · Mixture 1

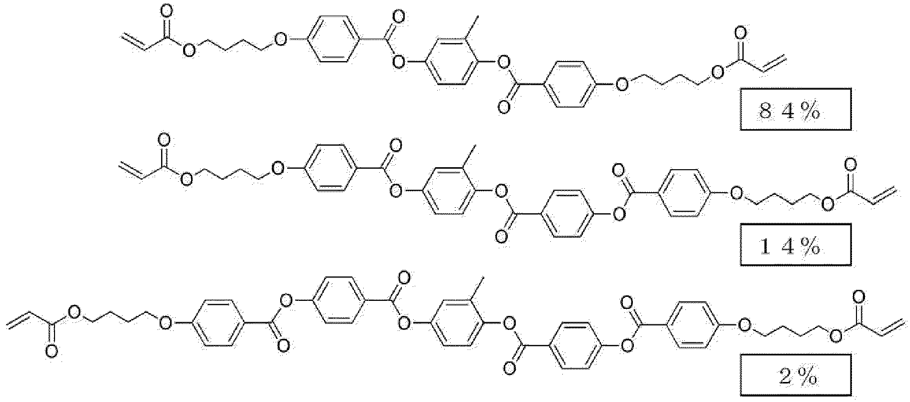

The numerical values are given in % by mass.

### Alignment Control Agent 1

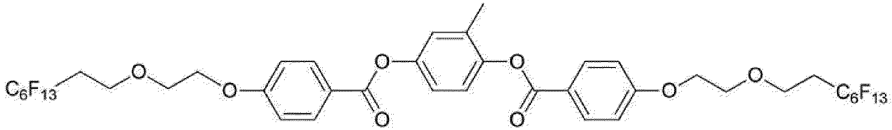

### Alignment Control Agent 2

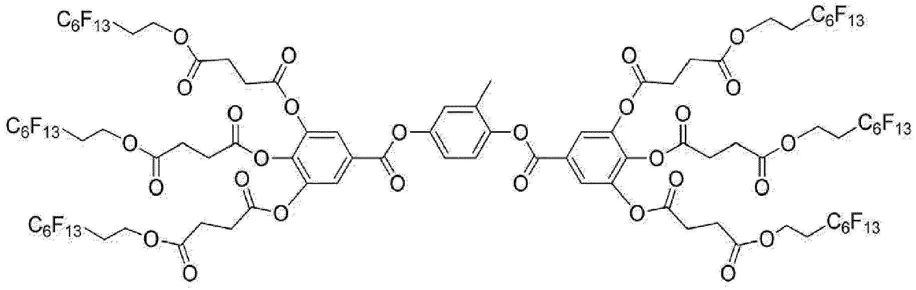

The composition for forming a retardation layer was added dropwise onto the alignment film P-1 subjected to the exposure treatment obtained as described above, and the composition was applied by spin coating such that the film thickness was approximately 1.5 µm, and then dried to obtain a coating film of the composition for forming a retardation layer.

Next, the obtained support with a coating film was placed on a hot plate at 50°C, and the coating film was irradiated with ultraviolet rays for 6 seconds using an electrodeless lamp "D bulb" (60 mW/cm²) manufactured by Fusion UV Systems, Inc. in an environment with an oxygen concentration of 1,000 ppm or less, and the liquid crystal phase was fixed. In this manner, a retardation layer 1 in which the thickness was adjusted to have a desired in-plane retardation was obtained.

The orientation of the molecular axis of the liquid crystal compound at one end part of the produced retardation layer 1 in the lateral direction was 90° with respect to the lateral direction (corresponding to the lateral direction of the support of 1,000 mm) of the retardation layer 1 (corresponding to the molecular axis of the liquid crystal compound located at the left end part of the paper surface in FIG. 7). Furthermore, the orientation of the molecular axis of the liquid crystal compound at the other end of the produced retardation layer 1 in the lateral direction was 80° with respect to the lateral direction (corresponding to the lateral direction of the support of 1,000 mm) of the retardation layer 1 (corresponding to the molecular axis of the liquid crystal compound located at the right end part of the paper surface in FIG. 7). In the retardation layer 1, the orientation of the molecular axis of the liquid crystal compound continuously changed in a direction from one end (left end part) to the other end (right end part) of the retardation layer 1 (see FIG. 7).

The orientation (azimuthal angle) of the molecular axis of the liquid crystal compound is a value expressed under a condition in which the azimuthal angle increases in a direction in which the molecular axis rotates counterclockwise, with the lateral direction of the retardation layer 1 as 0°.

In addition, the in-plane retardation was 276 nm at any position of the retardation layer 1 including one end part and the other end part.

A retardation layer 2 was produced according to the same procedure as the above-described procedure for preparing the retardation layer 1, except that the shading of the mask, the transmission axis of the wire grid, and the thickness of the retardation layer were appropriately adjusted. The characteristics of each retardation layer are shown in the tables described later.

In the retardation layer 2, the orientation of the molecular axis of the liquid crystal compound continuously changed in a direction from one end (left end part) to the other end (right end part) of each layer.

### <Twist layer>

As a support, TAC (cellulose acylate film) having a width of 1,000 mm and a length of 200 mm was prepared. The support was passed through a dielectric heating roll at a temperature of 60°C to raise the film surface temperature to 40°C, and then an alkaline solution having the following composition was applied to one surface of the film at an application amount of 14 mL/m² using a bar coater, and the film was allowed to stay under a steam-type far-infrared heater (manufactured by Noritake Co., Ltd.) heated to 110°C for 10 seconds.

Next, pure water of 3 mL/m² was applied using the same bar coater.

Next, washing with water using a fountain coater and draining with an air knife were repeated three times, and then the support was allowed to stay in a drying zone at 70°C for 5 seconds to be dried, thereby preparing a cellulose acylate film 1 subjected to a saponification treatment.

In a case where an in-plane retardation Re of the cellulose acylate film 1 was measured with AxoScan, the in-plane retardation Re was 1 nm.

| Alkaline solution | |
|---|---|
| · Potassium hydroxide | 4.7 parts by mass |
| · Water | 15.7 parts by mass |
| · Isopropanol | 64.8 parts by mass |
| · Surfactant (C₁₆H₃₃O(CH₂CH₂O)₁₀H) | 1.0 part by mass |
| · Propylene glycol | 14.9 parts by mass |

The saponified surface of the cellulose acylate film 1 (resin layer) subjected to the saponification treatment was coated with a composition for forming an alignment film, having the following formulation, using a wire bar coater at 24 mL/m², and dried with hot air at 100°C for 120 seconds.

| Formulation of composition for forming alignment film | |
|---|---|
| · Modified polyvinyl alcohol | 28 parts by mass |
| · Citric acid ester (AS3, manufactured by Sankyo Chemical Co., Ltd.) | 1.2 parts by mass |
| · Photoinitiator (IRGACURE 2959, manufactured by BASF SE) | 0.84 parts by mass |
| · Glutaraldehyde | 2.8 parts by mass |
| · Water | 699 parts by mass |
| · Methanol | 226 parts by mass |

### Modified polyvinyl alcohol (see structural formula below)

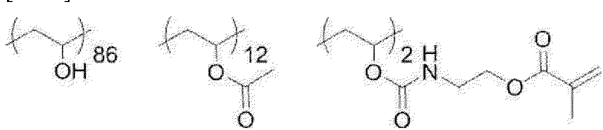

A rubbing treatment (rayon cloth, pressure: 0.1 kgf (0.98 N), rotation speed: 1,000 revolutions per minute (rpm), transportation speed: 10 m/min, number of times: 1 round trip) was performed on the surface of the alignment film of the cellulose acylate film 1 on which the alignment film was formed, in a direction rotated clockwise by 90° with reference to the longitudinal direction of the cellulose acylate film 1 as viewed from the alignment film surface.

Next, the following components were mixed to prepare a composition for forming a twist layer having the following formulation.

| | |
|---|---|
| Composition for forming twist layer | |
| · Mixture | 1 100 parts by mass |
| · Alignment control agent 1 | 0.05 parts by mass |
| · Alignment control agent 2 | 0.02 parts by mass |
| · Dextrorotatory chiral agent LC756 (manufactured by BASF SE) | Adjusted according to the target number of pitches x and the film thickness y |
| · Polymerization initiator (IRGACURE OXE01, manufactured by BASF SE) | 1.0 part by mass |
| · Solvent (methyl ethyl ketone) | Amount such that concentration of solute was 20% by mass |

The following composition for forming a twist layer was applied to the rubbed surface of the alignment film on the cellulose acylate film 1 using a wire bar.

Thereafter, the coating film was dried, placed on a hot plate at 50°C, and irradiated with ultraviolet rays for 6 seconds using an electrodeless lamp "D bulb" (60 mW/cm²) manufactured by Fusion UV Systems, Inc., in an environment with an oxygen concentration of 1,000 ppm or less to fix the liquid crystal phase, thereby obtaining a twist layer 1.

A twist layer 2 was produced in the same procedure as the twist layer 1, except that the number of pitches x and the film thickness y were adjusted to be as shown in Table 2 below.

### <Production of reflection film>

A linearly polarized light reflection film (reflective layer) and any of the retardation layers 1 and 2 and the twist layers 1 and 2 produced above were bonded to a polycarbonate substrate (PC substrate) having a size of 1,000 mm in width × 200 mm in length through a pressure-sensitive adhesive layer (OCA) as shown in Table 2 below, thereby producing reflection films 1 to 4 used in Examples 1 to 4 and a reflection film 5 used in Comparative Example 1.

The linearly polarized light reflection film was bonded to the polycarbonate substrate such that the direction of the in-plane slow axis of the optically anisotropic layer in the linearly polarized light reflection film was orthogonal to the lateral direction of the polycarbonate substrate. That is, the reflection axis of the linearly polarized light reflection film was orthogonal to the lateral direction of the reflection film (see FIG. 4).

In addition, as described above, the orientation of the molecular axis of the liquid crystal compound in the retardation layers 1 and 2 continuously rotated in one direction, and the one direction was parallel to the lateral direction of the reflection film. That is, the one direction was orthogonal to the direction of the in-plane slow axis of the optically anisotropic layer in the linearly polarized light reflection film.

In addition, in a case of bonding the retardation layers 1 and 2 and the twist layers 1 and 2, the support and the alignment film were also bonded, and the lateral direction of the support and the lateral direction of the polycarbonate substrate were bonded to match each other. Further, in a case of bonding the retardation layers 1 and 2 and the twist layers 1 and 2, the support was bonded to be disposed on the outer side (the side opposite to the polycarbonate substrate).

### <Evaluation>

Assuming a head-up display system using a pillar-to-pillar combiner, an iPad (registered trademark) was disposed such that the incidence angle was 45° below the reflection film produced above. More specifically, as shown in FIG. 12, which is a schematic view of the side surface of the head-up display system used in Examples, the iPad (registered trademark) 50 was disposed below the reflection film 52 such that the incidence angle θ1 of the emitted light (projection light) from the iPad (registered trademark) 50 functioning as a light source with respect to the reflection film 52 was 45° and the reflection angle θ2 was 45°.

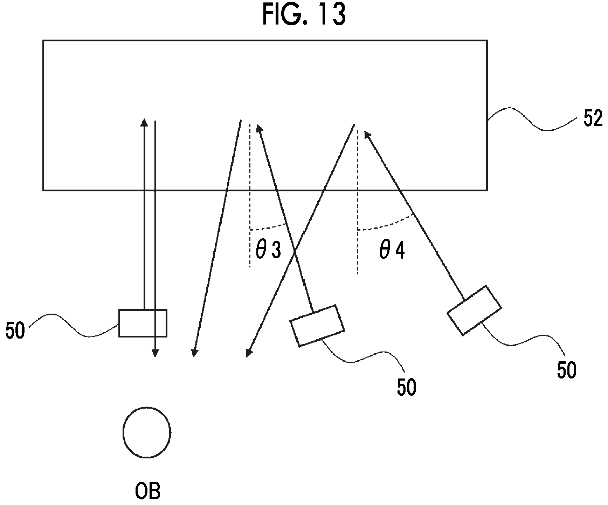

In this case, as shown in FIG. 13, which is a schematic view in a case of being observed from the upper side of the head-up display system used in Examples, the position of the iPad (registered trademark) 50 was changed, and the image emitted from each position and displayed on the reflection film 52 was observed. More specifically, as shown in FIG. 13, the image displayed on the reflection film 52 was observed by disposing the iPad (registered trademark) 50 at each of a disposition position 1 where the iPad (registered trademark) 50 was disposed in front of the observer OB, a disposition position 2 where the iPad (registered trademark) 50 was disposed such that the incidence angle θ3 of the emitted light from the iPad (registered trademark) 50 was 15°, and a disposition position 3 where the iPad (registered trademark) 50 was disposed such that the incidence angle θ4 of the emitted light from the iPad (registered trademark) 50 was 30°.

The polarized light emitted from the iPad (registered trademark) was circular polarization, and the λ/4 film was interposed between the iPad (registered trademark) and the retardation layer to make the polarized light incident on the retardation layer be P-polarized light as appropriate.

In the head-up display system obtained above, a white character on a black background was displayed on the iPad (registered trademark), the position of the iPad (registered trademark) was changed as described above, and the HUD image at each disposition position was evaluated according to the following standard.
A: bright and the characters were easily visible.
B: slightly dim, but the characters were visible (acceptable level).
C: dark and the characters were difficult to see.

In Table 2, the column of "In-plane Re [nm]" in the column of "Retardation layer" represents the in-plane retardation (nm) of the retardation layer at a wavelength of 550 nm. The column of "Angle [°] at left end" in the column of "Retardation layer" represents the angle (°) of the molecular axis of the liquid crystal compound with respect to a horizontal direction at the left end position (front position of the observer OB in FIG. 13) of the retardation layer in the lateral direction. The column of "Angle [°] at right end" in the column of "Retardation layer" represents the angle (°) of the molecular axis of the liquid crystal compound with respect to the horizontal direction at the right end position of the retardation layer in the lateral direction.

In Table 2, the column of "0°" in the column of "Evaluation" represents the evaluation result in a case where the iPad (registered trademark) was disposed at the disposition position 1 described above, the column of "15°" represents the evaluation result in a case where the iPad (registered trademark) was disposed at the disposition position 2 described above, and the column of "30°" represents the evaluation result in a case where the iPad (registered trademark) was disposed at the disposition position 3 described above.

**[Table 2]**

| | Configuration | Reflection Layer | | | Twist Layer | | Evaluation | | |
|---|---|---|---|---|---|---|---|---|---|
| | | In-plane RE [nm] | Angle at left end [°] | Angle at right end [°] | Number of Pitches x | Film thickness y [µm] | 0° | 15° | 30° |
| Example 1 | PC substrate/OCA/Reflection layer/OCA/Retardation layer 1 | 276 | 90 | 80 | - | - | A | A | A |
| Example 2 | PC substrate/OCA/Reflection layer/OCA/Retardation layer 2 | 276 | 90 | 84 | - | - | A | A | B |
| Example 3 | PC substrate/OCA/Reflection layer/OCA/Twist layer 1 | - | - | - | 0.027 | 3.2 | A | A | A |
| Example 4 | PC substrate/OCA/Reflection layer/OCA/Twist layer 2 | - | - | - | 0.055 | 3 | A | A | B |
| Comparative Example 1 | PC substrate/OCA/Reflection layer | - | - | - | None | None | A | C | C |

As shown in Table 2, it was confirmed that a desired effect was obtained in a case where the reflection film according to the embodiment of the present invention was used.

In addition, from the comparison between Examples 1 and 2, it was confirmed that, in a case where the in-plane retardation of the retardation layer at a wavelength of 550 nm was 210 to 340 nm and the angle formed by the molecular axis of the liquid crystal compound located at one end of the retardation layer in the one direction and the molecular axis of the liquid crystal compound located at the other end of the retardation layer in the one direction was 7° to 15°, a more excellent effect was obtained.

In addition, from the comparison between Examples 3 and 4, it was confirmed that, in a case where Expression (3) and Expression (4) were satisfied, a more excellent effect was obtained.

### Explanation of References

10, 100: head-up display system
12, 112: projector
14, 114, 52: reflection film
16, 116: substrate
18, 118: linearly polarized light reflection layer
18a: optically anisotropic layer 18a
18b: isotropic layer
20: polarization conversion layer
30: retardation layer
32: liquid crystal compound
40: photo-alignment film
42A, 42B: polarizer
44A, 44B: mask
50: iPad (registered trademark)

## Claims

1. A reflection film comprising:
a linearly polarized light reflection layer including an optically anisotropic layer and an isotropic layer; and
a polarization conversion layer,
wherein the polarization conversion layer satisfies a requirement of (A) or (B), and
a width of the reflection film in a direction orthogonal to an in-plane slow axis of the optically anisotropic layer is 300 mm or more,
(A) the polarization conversion layer is a retardation layer, the retardation layer contains a liquid crystal compound, and an orientation of a molecular axis of the liquid crystal compound continuously or stepwise changes along one in-plane direction of the retardation layer, and
(B) the polarization conversion layer is a layer in which a helical alignment structure of a liquid crystal compound, the liquid crystal compound being twist-aligned along a helical axis extending along a thickness direction, is fixed, and in a case where the number of pitches of the helical alignment structure is defined as x and a film thickness of the polarization conversion layer is defined as y (µm), relationships of Expression (1) and Expression (2) are satisfied, $0.010 \leq x < 0.100 ,$ Expression (1) and $0.5 \leq y \leq 5.0 .$ Expression (2)

2. The reflection film according to claim 1,
wherein the polarization conversion layer satisfies the requirement of (A),
an in-plane retardation of the retardation layer at a wavelength of 550 nm is 100 to 500 nm, and
an angle formed by a molecular axis of the liquid crystal compound positioned at one end in the one direction and a molecular axis of the liquid crystal compound positioned at the other end in the one direction is 3° to 40°.

3. The reflection film according to claim 1,
wherein the polarization conversion layer satisfies the requirement of (A),
an in-plane retardation of the retardation layer at a wavelength of 550 nm is 210 to 340 nm, and
an angle formed by a molecular axis of the liquid crystal compound positioned at one end in the one direction and a molecular axis of the liquid crystal compound positioned at the other end in the one direction is 7° to 15°.

4. The reflection film according to claim 1,
wherein the polarization conversion layer satisfies the requirement of (B), and
the number of pitches x of the helical alignment structure and the film thickness y (µm) of the polarization conversion layer satisfy relationships of Expression (3) and Expression (4), $0.014 \leq x \leq 0.050 ,$ Expression (3) and $0.6 \leq y \leq 4.0 .$ Expression (4)

5. A head-up display system comprising:
the reflection film according to any one of claims 1 to 4; and
a projector that irradiates the reflection film with projection light.

6. The head-up display system according to claim 5, wherein the projector emits P-polarized light as the projection light.
